# EUROPÄISCHE PATENTSCHRIFT

(11) **EP 0 541 566 B1**
(45) Veröffentlichungstag und Bekanntmachung des Hinweises auf die Patenterteilung: **01.06.1994**
(21) Anmeldenummer: 91911266.4
(22) Anmeldetag: 24.06.1991
(51) Int. Cl.: F16D 1/08, F16D 1/04, F16D 1/02, F16D 1/06

(54) **GETRIEBE MIT EINER NACH AUSSEN FÜHRENDEN AN- ODER ABTRIEBS-WELLE**
GEAR UNIT WITH EXTERNALLY PROJECTING INPUT OR OUTPUT SHAFT
ENGRENAGE COMPORTANT UN ARBRE MOTEUR OU RECEPTEUR DEPASSANT VERS L'EXTERIEUR

(30) Priorität: 31.07.1990 DE 4024257
(43) Veröffentlichungstag der Anmeldung: 19.05.1993
(73) Patentinhaber: Wittenstein, Manfred, Dipl.-Ing., D-97980 Bad Mergentheim (DE)
(72) Erfinder: WITTENSTEIN, Manfred, D-6991 Igersheim (DE); ORLOWSKI, Bernhard, D-7000 Stuttgart 1 (DE)
(74) Vertreter: Pfusch, Volker, Dipl.-Ing.
(86) Internationale Anmeldenummer: DE9100515
(87) Internationale Veröffentlichungsnummer: WO9202740

(56) Entgegenhaltungen:
- DE-A- 1 450 775
- DE-A- 1 811 614
- DE-C- 0 514 784
- FR-E- 0 082 993
- US-A- 2 318 051
- US-A- 2 617 672
- US-A- 3 143 366
- US-A- 4 411 549

## Beschreibung

Die Erfindung betrifft ein Getriebe mit einer nach außen führenden An- oder Abtriebs-Welle nach Patentanspruch 1.

Insbesondere bei spielarmen Getrieben wie speziell spielarmen Planetengetrieben darf die Verbindung der an die An- oder Abtriebswelle anzuschließenden Teile kein Spiel aufweisen. Aus diesem Grund sind Welle-Nabe-Verbindungen über Nut- und Federpassungen für solche Anwendungen nicht geeignet. Erforderlich ist vielmehr ein spiel- und verschleißfreier Kraftschluß zwischen den zu verbindenden Teilen. Eine kraftschlüssige Verbindung ist in vielen Fällen auch noch aus Gründen einer einfachen und raumsparenden Befestigungsart erwünscht.

Hiervon ausgehend besteht das wesentliche der Erfindung zugrunde liegende Problem darin, eine solche Kraftschlußverbindung für ein an die An- oder insbesondere Abtriebswelle anzuschließendes ,Teil zu schaffen, die funktionell sicher, einfach zu handhaben und axial schmal bauend ist.

Zusätzlich soll die An- oder Abtriebswelle bei unverändertem Aufbau wahlweise Anschlußmöglichkeiten für einen in die jeweilige Welle eingreifenden Wellenstumpf und/oder für eine Flanschanbindung des anzuschließenden Teiles besitzen. Das Bauvolumen soll trotz der unterschiedlichen Anschlußmöglichkeiten axial möglichst gering bleiben.

Gelöst wird dieses Problem durch eine Ausbildung des axial freien Endabschnittes der An- oder Abtriebswelle nach den Merkmalen des Patentanspruchs 1.

Zweckmäßige Ausgestaltungen sind Gegenstand der Unteransprüche.

Besonders geeignet sind die erfindungsgemäß vorgeschlagenen Arten einer kraftschlüssigen Verbindung an der Antriebswelle eines spielarmen Planetengetriebes und zwar besonders bei solchen, bei denen die Abtriebswelle mit dem Umlaufträger der Abtriebsstufe zu einem integrierten Teil zusammengefaßt ist.

Aus DE-AS-1675228 ist bei einem gattungsgleichen Getriebe bereits eine Welle-Nabe-Verbindung mit einem Spannring bekannt. Im Unterschied zu dem erfindungsgemäßen Spannring ist jener jedoch lediglich zur Fixierung in axialer Richtung bestimmt, während die Fixierung in Umfangsrichtung durch eine für eine Drehmomentübertragung ausgelegte Nutund Paßfederverbindung erfolgt. Jener Spannring kann daher radial geschlitzt sein. Eine solche radiale Schlitzung ist bei drehmomentübertragenden Spannelementen dagegen nicht zulässig.

Wichtig für eine sichere und einwandfreie Funktion der erfindungsgemäßen Verbindung ist es auch, daß der Spannring im Gegensatz zu der vorbekannten Ausführung axial auf Anschlag angezogen wird. Denn erst dadurch ist eine tatsächlich sichere plane Ausrichtung des erfindungsgemäß wahlweise auch als Anschlußflansch verwendbaren Spannringes möglich. Ferner können die Spannschrauben bei einer Montage des Spannringes auf Anschlag ohne Drehmomentschlüssel oder andere spannkraftbegrenzende Überwachungsmaßnahmen angezogen werden.

Soweit drüber hinaus aus DE-A-31 20 151 eine spannringbeaufschlagte Welle-Nabe-Verbindung bekannt ist, geht es dort allein darum, einen Flansch fest mit einer Welle zu verbinden und dabei gleichzeitig Mittel zur Verfügung zu stellen, mit denen diese feste Verbindung ggf. wieder gelöst werden kann. Für den Anschluß einer Welle an die An- oder Abtriebswelle eines Getriebes lassen sich hieraus keine Hinweise entnehmen. Dies gilt insbesondere in bezug darauf, daß der Spannring gleichzeitig die Funktion eines Anschlußflansches ausüben soll, um wahlweise unterschiedliche Befestigungsarten zu ermöglichen.

Auch die aus FR-E-82 993 bekannte Wellenverbindung betrifft keinen Anschluß einer Welle an die An- oder Abtriebswelle eines Gebtriebes. Insbesondere fehlt dort das Merkmal c des Anspruchs 1, so daß die erfindungsgemäß vorgesehenen Anwendungsalternativen nicht möglich sind. Nach der FR-E-82 993 kann lediglich eine Welle in einen Hohlwellenstumpf eingesteckt und mit diesem durch einen den Stumpf übergreifenden dessen Innenumfang verkleinernden Spannring kraftschlüssig verbunden werden. Nicht erzielbar ist dagegen mit dieser Einrichtung die nach der Erfindung alternative Anbindung, nach der unter Beibehaltung ein und desgleichen Spannringes dieser Spannring auch als Flansch für eine Wellenflanschanbindung benutzt werden kann. Bei der Verwendung als Flansch für eine Wellenflanschanbindung ist es nämlich zwingend notwendig, daß der Flansch an seiner Anlagefläche lotrecht plan zur Getriebewellenachse ausgerichtet ist. Um dies zu ermöglichen, muß der Spannring axial auf Anschlag anziehbar sein, da anderenfalls ein geringfügiges Verkippen des Spannringes unvermeidbar ist. Hinweise hierauf enthält die FR-E-82 993 nicht. Hinzu kommt bei den erfindungsgemässen alternativen Wellenanbindungsmöglichkeiten noch, daß auch bei Flanschanbindung einer Welle diese durch einen zusätzlichen Wellenstumpf zentrierbar ist.

Mit der Erfindung und zwar insbesondere mit dem dieser zugrundeliegenden Problem nicht vergleichbar ist ferner die Anbindung eines Flansches an eine Welle nach US 3, 143, 366. Denn auch hier ist wiederum kein Anschluß einer Welle an ein Getriebe angegeben. Es werden vielmehr eine Welle und ein Flansch miteinander an dem Ende der Welle verbunden, um dadurch die Möglichkeit für eine lösbare Anbindung eines Anschlußteiles an den Flansch zu schaffen. Während nach der Erfindung zwei Wellen mit Hilfe eines Spannringes direkt spielfrei kraftschlüssig miteinander verbunden werden, indem die anzuschließende Welle in einen stirnseitigen Hohlraum der Getriebewelle einführbar und dort durch eine radiale Innenwandverkleinerung verspannbar ist, ist eine solche Anbindung bei der Wellenausführung nach US 3, 143, 366 generell nicht möglich. Denn dort ist der stirnseitige zylindrische Hohlraum des Wellenendes jeweils durch eine Schraube bzw. ein Blech mit Schrauben als Spannmittel verschlossen. Derart verschlossene Hohlräume können keinen Hinweis auf die erfindungsgemäße Lösung geben, nach der die anzubindende Welle in einen solchen Hohlraum zum kraftschlüssigen Verspannen einführbar sein muß.

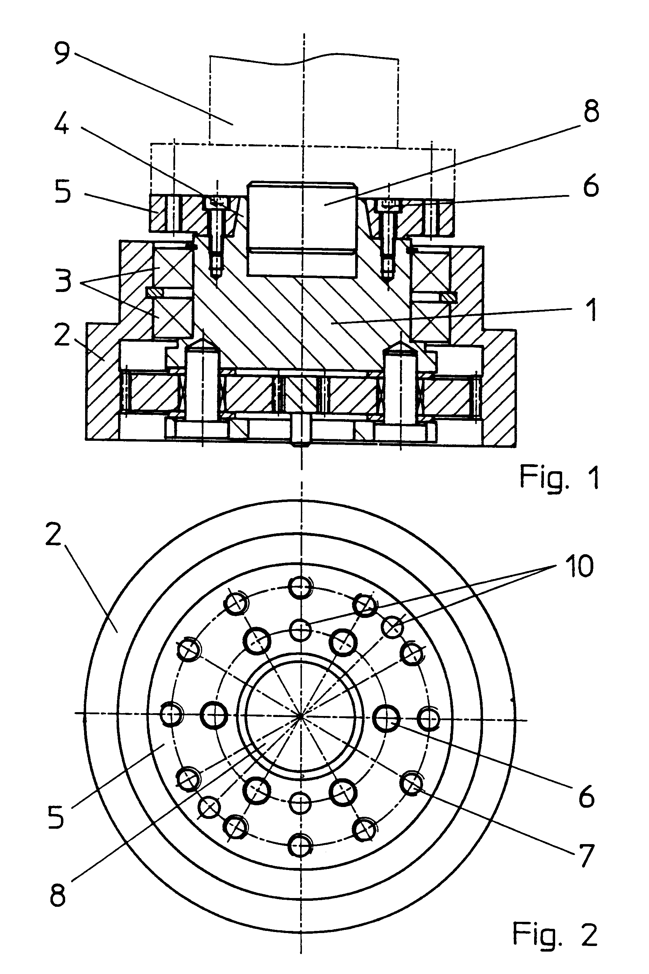

Ein Ausführungsbeispiel ist in der Zeichnung dargestellt. Es zeigen
- Fig. 1: einen Teilabschnitt der Abtriebsstufe eines Planetengetriebes zur einen Hälfte im Längsschnitt und zur anderen Hälfte in Ansicht,
- Fig. 2: eine Ansicht auf die Stirnseite der Abtriebsstufe

Bei einem Planetengetriebe ist der Umlaufträger 1 der Abtriebsstufe in dem Gehäuse 2 des Planetengetriebes über Lager 3 gelagert.

In dem Umlaufträger 1 ist die zu ihrem freien Ende hin hohle Abtriebswelle 4 integriert. Um an diese Abtriebswelle 4 über das Planetengetriebe anzutreibende Teile anschließen zu können, ist auf das freie Ende der Abtriebswelle 4 ein Spannring 5 aufsetzbar. In dem axialen Endbereich der Abtriebswelle 4, auf dem der Spannring 5 aufsitzt, ist der Außenumfang der Abtriebswelle zu deren freiem Ende hin konisch verjüngt ausgebildet. Die Innenumfangsfläche des Spannringes 5 ist mit einem entsprechenden Gegenkonus ausgestattet. Axial gegen den Umlaufträger 1 verspannbar ist der Spannring 5 über auf seinem Umfang verteilte Schrauben 6. Beim Spannen des Spannringes 5 mit Hilfe der Schrauben 6 wird der radial innerhalb des Konusbereiches liegende Ringabschnitt der Abtriebswelle 4 bezüglich seines Innendurchmessers geringfügig verkleinert. Dadurch ist es möglich, einen aus dem an das Planetengetriebe anzubindenden Teil herausragenden Wellenstumpf über einen Kraftschluß mit der Abtriebswelle 4 zu verbinden.

Um ein an die Abtriebswelle 4 anzubindendes Teil auch über eine Flanschverbindung anschließen zu können, ist der Spannring 5 auf seiner nach außen liegenden Stirnfläche plan und mit Gewindebohrungen 7 zur Aufnahme von Flanschschrauben ausgebildet.

Vorteilhafterweise ragt die plane Stirnfläche des Spannringes 5 zur Anlage für den Gegenflansch über die Stirnfläche des freien Endes der Abtriebswelle 4 hinaus. Ein zwingendes Erfordernis ist dies jedoch nicht.

Bei einer Flanschanbindung eines an die Abtriebswelle 4 anzuschließenden Teiles kann zur Zentrierung ein Wellenstumpf 8 in die zylindrisch hohle Abtriebswelle 4 eingepaßt werden. In der Zeichnung ist ein über eine Flanschverbindung an die Abtriebswelle 4 anzuschließendes Teil strichpunktiert und mit 9 bezeichnet dargestellt.

Das Spannen des Spannringes 5 zur Erzielung einer kraftschlüssigen Verbindung einer in die Abtriebswelle 4 eingeschobenen Anschlußwelle erfolgt dadurch, daß der Spannring 5 auf Anschlag über die Schrauben 6 angezogn wird. Dadurch ergibt sich ein definiert vorgebbarer Kraftschluß zwischen dem Spannring 5, der Welle 4 und dem Wellenstumpf 8. Die Maßtoleranzen sind dabei so ausgelegt, daß der nach radial innen zu verspannende am Stirnende der Welle liegende Ringabschnitt unter Berücksichtigung der Toleranz des Durchmessers der in die Welle 4 einzuführenden Anschlußwelle bzw. des Wellenstumpfes 8 im elastischen Bereich seines Werkstoffes verformbar ist.

Soll ein Anschlußteil allein über die Flanschverbindung mit der Welle 4 verbunden werden, empfielt es sich, in den radial durch den Spannring 5 zu verspannenden Ringabschnitt der Welle 4 in jedem Fall einen Wellenstumpf 8 als Gegenlager zur Abstützung der Spannring-Kraft einzusetzen.

Bei einer Anbindung eines Anschlußteiles 9 über eine Flanschverbindung können zur verdrehfesten Sicherung des Spannringes 5 an der Welle 4 einerseits und des Anschlußteilflansches an dem durch den Spannring 5 gebildeten Flansch andererseits jeweils Paßstifte 10 zwischen dem Spannring 5 und der Welle 4 sowie zwischen dem Anschlußflansch und dem Spannringflansch eingebracht werden.

## Patentansprüche

1. Getriebe mit nach außen führender An- oder Abtriebswelle, bei dem diese Welle (4) zumindest in einem in die Stirnfläche ihres freien Endes mündenden Bereich zur spielfreien Aufnahme einer von außerhalb des Getriebes an die Welle (4) anzubindenden Anschlußwelle zylindrisch hohl ist, mit den folgenden Merkmalen :
**(a)** in dem zylindrisch hohlen Bereich besitzt die Welle (4) einen axialen Endabschnitt, in dem sie sich auf ihrem Außenumfang konisch zum Ende hin verjüngt,
**(b)** auf dem sich konisch verjüngenden Endabschnitt der Welle (4) ist ein Spannring (5) mit konisch gegenläufigem Innenumfang aufsetzbar und gegen die Welle (4) axial so verspannbar, daß sich der Innendurchmesser des Endabschnittes der Welle (4) geringfügig verkleinern kann,
**(c)** der Spannring (5) ist zur Erzielung einer vorgebbaren Innendurchmesserverkleinerung der Welle (4) axial auf Anschlag spannbar und zum Anflanschen eines mit der Welle (4) zu verbindenden Anschlußteils als Befestigungsflansch ausgebildet,
**(d)** eine in den zylindrischen Hohlraum der Getriebewelle (4) einsteckbare Anschlußwelle (8) ist durch die Innendurchmesserverkleinerung der Welle (4) kraftschlüssig mit dieser verbindbar.

2. Getriebe nach Anspruch 1,
**dadurch gekennzeichnet**,
daß der als Befestigungsflansch dienende Spannring (5) mit axialen Gewindebohrungen (7) zur Aufnahme von den Gegenflansch des anzubindenden Teiles fixierenden Befestigungsschrauben versehen ist.

3. Getriebe nach Anspruch 1 oder 2,
**dadurch gekennzeichnet**,
daß der als Befestigungsflansch ausgebildete Spannring (5) über in die Welle (4) eingreifende Paßstifte (10) verdrehfest gegenüber dieser fixierbar ist.

4. Getriebe nach einem der vorhergehenden Ansprüche,
**dadurch gekennzeichnet**,
daß der in den Spannring (5) integrierte Befestigungsflansch Paßstift-Bohrungen für eine Paßstift-Verdrehsicherung gegenüber dem zu befestigenden Anschlußteil benutzt.

5. Getriebe nach einem der vorhergehenden Ansprüche,
**dadurch gekennzeichnet**,
daß das Getriebe ein Planetengetriebe ist.

6. Getriebe nach einem der vorhergehenden Ansprüche,
**dadurch gekennzeichnet**,
daß die Welle (4) eine in den Umlaufträger (1) der Abtriebsstufe integrierte Abtriebswelle (4) ist.

## Claims

1. A gear-box with an outwardly extending input or output shaft where this shaft (4) is cylindrically hollow at least in a portion which opens out into the end face of its free end in order to accommodate without clearance a connecting shaft which is to be connected to the shaft (4) outside the gear-box, with the following features:
(a) in the hollow cylindrical portion the shaft (4) has an axial end portion in which it tapers conically to the end of its outer periphery,
(b) a clamping ring (5) having a conically oppositely extending inner periphery can be fitted on the conically tapering end portion of the shaft (4) and so axially clamped against the shaft (4) that the inside diameter of the end portion of the shaft (4) can be slightly reduced,
(c) in order to achieve a predeterminable reduction of the inside diameter of the shaft (4), the clamping ring (5) can be axially clamped as far as it will go and can be constructed as a fixing flange for the flange mounting of a part which has to be connected to the shaft (4),
(d) a connecting shaft (8) adapted to be inserted into the cylindrical hollow cavity in the transmission shaft (4) can be frictionally connected to this latter by the reduction of the inside diameter of the shaft (4).

2. A gear-box according to Claim 1, characterised in that the clamping ring (5) which serves as a fixing flange is provided with axial screw-threaded bores (7) to receive fixing bolts for securing the mating flange of the part to be connected.

3. A gear-box according to Claim 1 or 2, characterised in that the clamping ring (5) constructed as a fixing flange can be non-rotatably secured in respect of the shaft (4) by means of fixing pins (10) which engage the latter.

4. A gear-box according to one of the preceding Claims, characterised in that the fixing flange integrated into the clamping ring (5) uses fixing pin bores for a fixing pin type of non-rotatable attachment to the connected part fixed to it.

5. A gear-box according to one of the preceding Claims, characterised in that the gear mechanism is a planetary gear-box.

6. A gear-box according to one of the preceding Claims, characterised in that the shaft (4) is an output shaft (4) integrated into the epicyclic support (1) of the output stage.

## Revendications

1. Engrenage comportant un arbre moteur ou récepteur dans lequel cet arbre (4) est cylindrique et creux, du moins dans une région débouchant dans la surface frontale de son extrémité libre, pour recevoir sans jeu un arbre de raccordement devant être monté par l'extérieur de l'engrenage sur ledit arbre (4), et présentant les caractéristiques suivantes :
(a) dans la section cylindrique creuse, l'arbre (4) comporte une section terminale axiale dont la circonférence extérieure se rétrécit de manière conique en direction de l'extrémité,
(b) sur la section terminale à rétrécissement conique de l'arbre (4) peut être engagée une bague de serrage (5) avec une circonférence intérieure se rétrécissant de manière conique en sens inverse et bloquée axialement par rapport à l'arbre (4) de façon que le diamètre intérieur de ladite section terminale de l'arbre (4) peut diminuer légèrement,
(c) pour obtenir une diminution prédéterminable du diamètre intérieur de l'arbre (4), la bague de serrage (5) peut être bloquée axialement en butée et est conformée en bride de fixation pour brider un élément de raccordement devant être accouplé avec l'arbre (4),
(d) un arbre de raccordement (8) emboîtable dans la cavité cylindrique de l'arbre (4) de l'engrenage peut être accouplé par adhérence avec ledit arbre par diminution du diamètre intérieur de l'arbre (4).

2. Engrenage selon la revendication 1, caractérisé en ce que la bague de serrage (5) servant de bride de fixation comporte des taraudages axiaux (7) pour la réception de vis de fixation qui bloquent la bride conjuguée de l'élément de raccordement à accoupler.

3. Engrenage selon l'une des revendications 1 ou 2, caractérisé en ce que la bague de serrage (5) conformée en bride de fixation peut être solidarisée en rotation avec l'arbre (4) par l'intermédiaire de goujons d'assemblage (10) qui s'engagent dans ledit arbre.

4. Engrenage selon l'une des revendications précédentes, caractérisé en ce que la bride de fixation intégrée à la bague de serrage (5) comporte des alésages de goujons d'assemblage pour la réalisation d'un blocage en rotation à goujons d'assemblage par rapport à l'élément de raccordement à accoupler.

5. Engrenage selon l'une des revendications précédentes, caractérisé en ce que l'engrenage est un engrenage planétaire.

6. Engrenage selon l'une des revendications précédentes, caractérisé en ce que l'arbre (4) est un arbre récepteur (4) intégré dans le pignon planétaire (1) de l'étage de sortie.
